# EUROPÄISCHE PATENTSCHRIFT

(11) **EP 3 197 664 B1**
(45) Veröffentlichungstag und Bekanntmachung des Hinweises auf die Patenterteilung: **09.03.2022**
(21) Anmeldenummer: 15774560.5
(22) Anmeldetag: 25.09.2015
(51) Int. Cl.: B29C 49/12, B29C 49/64, B29B 11/14, B29B 11/08, B29C 49/00, B29C 49/06

(54) **STRECKBLASVERFAHREN**
STRETCH BLOW MOULDING PROCESS
PROCÉDÉ D'ÉTIRAGE-SOUFFLAGE

(30) Priorität: 25.09.2014 CH 14542014
(43) Veröffentlichungstag der Anmeldung: 02.08.2017
(73) Patentinhaber: Alpla-Werke Alwin Lehner GmbH und Co.KG, 6971 Hard (AT)
(72) Erfinder: SIEGL, Robert, A-6850 Dornbirn (AT)
(74) Vertreter: Riederer Hasler & Partner Patentanwälte AG
(86) Internationale Anmeldenummer: PCT/EP2015/072120
(87) Internationale Veröffentlichungsnummer: WO 2016/046371

(56) Entgegenhaltungen:
- DE-A1- 3 024 283
- JP-A- H05 131 528
- JP-A- 2000 246 789
- JP-U- S4 720 855
- US-A- 4 880 593
- US-A- 5 213 752
- US-A1- 2008 257 855

## Beschreibung

### Technisches Gebiet

Die Erfindung betrifft ein 2-Stufen-Streckblasverfahren zur Herstellung von Behältern aus Preforms.

### Stand der Technik

Für die Verpackung von flüssigen Lebensmitteln und anderen schüttfähigen Stoffen, beispielsweise von Reinigungsmitteln, Körperpflegemitteln, Kosmetika, Kfz-Medien etc., kommen heutzutage hauptsächlich Behälter aus Kunststoff zum Einsatz. Viele gängige Kunststoffe erlangen aber erst durch eine Verstreckung ihre besonderen Eigenschaften. Das weit verbreitete Polyethylenterephthalat (PET) beispielsweise erreicht durch das Verstrecken, welches den Kristallisationsgrad beeinflusst, ein Vielfaches der Festigkeit gegenüber unverstrecktem PET. Insbesondere flaschenförmige Kunststoffbehälter werden deshalb oft in einem sogenannten Spritzstreckblasverfahren hergestellt.

Dabei wird zunächst in einem Spritzgiessprozess in einer Spritzform ein Preform hergestellt. Der Preform weist normalerweise einen im Wesentlichen länglichen, zylindrischen Körper auf und ist an einem Längsende geschlossen und am anderen offen ausgebildet. Zweckmässigerweise trennt ein Supportring den Körper von einem Halsteil mit einer Ausgiessöffnung. Dabei kann der Halsteil bereits die spätere Form des Flaschenhalses aufweisen. An der Aussenseite oder der Innenseite des Halsteils kann ein Gewinde oder ein anderes Mittel für die Befestigung eines Behälterverschlusses ausgebildet sein.

Der Preform wird nach seiner Herstellung entformt und gleich weiterverarbeitet oder für eine spätere Verarbeitung durch eine Blasmaschine zwischengelagert. Vor der Weiterverarbeitung in einer Blasmaschine kann der Preform bei Bedarf konditioniert werden. Danach wird er in eine Blasform der Blasmaschine eingebracht, dort mit einem Reckdorn (dieser wird auch als "Reckstange", "Streckdorn", "Streckstempel" oder "core rod" bezeichnet) verstreckt und durch ein in den Preform eingeblasenes Gas gemäss der Formkavität der Blasform aufgeblasen. Nach Abschluss des Blasprozesses kann die fertige Kunststoffflasche entformt werden. Dieser zweite Teil des Spritzstreckblasprozesses ist ein Streckblasverfahren.

In der vorliegenden Anmeldung wird auf den zweiten Teil eines sogenannten zweistufigen Spritzstreckblasverfahrens (oder synonym: "2-Stufen-Spritzstreckblasverfahren") eingegangen. Im zweistufigen Spritzstreckblasverfahren wird im ersten Schritt (Stufe) ein Preform gefertigt, und im zweiten Schritt (Stufe) der Preform zur Flasche streckgeblasen (Streckblasverfahren), wobei im zweistufigen Spritzstreckblasverfahren beide Schritte (Stufen) voneinander örtlich und zeitlich getrennt sind (getrennte Maschinen). Im Gegensatz dazu erfolgt in einem sogenannten einstufigen Spritzstreckblasverfahren (oder synonym: "1-Stufen-Spritzstreckblasverfahren") beides, d.h. das Herstellen der Preforms und der Flasche in derselben Maschine, örtlich und zeitlich zusammen (kein gänzliches Abkühlen des Preforms; nur Abkühlung von Spritztemperatur, welche in der Regel bei etwa 270°C liegt, auf Blastemperatur, welche ca. 100°C beträgt).

Der Vollständigkeit halber sei erwähnt, dass neben Spritzstreckblasverfahren auch Blasverfahren bekannt sind, bei denen ein geringfügiges Strecken und Blasen direkt anschliessend an das Spritzen des Preforms erfolgt. Der Preform verbleibt bei solchen Prozessen auf dem Spritzkern, der zugleich eine Art Reckdorn bildet. Dieses ähnelt dem einstufigen Spritzstreckblasverfahren, der Längshub des Spritzkerns ist jedoch meist nur wenige Millimeter. Da der Preform dabei nur geringfügig verstreckt wird, spricht man vom sogenannten Spritzblasen, im Gegensatz zum Spritzstreckblasen, das im Zusammenhang mit der vorliegenden Erfindung von Interesse ist. Beim bekannten Spritzblasen berührt der Preform den Spritzkern.

In zweistufigen Spritzstreckblasverfahren werden Preforms beim Blasen viel stärker gestreckt als beim Spritzblasen, im Falle von PET-Preforms z.B. auf das Zwei- bis Fünffache im Durchmesser und das Zweifache bis Fünffache in der Länge. Da das Strecken und Blasen des Preforms bei 2-Stufen-Spritzstreckblasverfahren auf einer anderen Maschine erfolgt als die Herstellung des Preforms, d.h. der Spritzprozess, und üblicherweise eine Zwischenlagerung des Preform vorgesehen ist, kühlt der Preform zwischen dem Spritzprozess und dem Strecken und Blasen ab, und zwar meistens bis auf Raumtemperatur. Um verstreckt werden zu können, muss der Preform jedoch weich sein, was durch vorgängiges Erhitzen desselben in einem Ofen erreicht wird. Der Streckvorgang wird einerseits durch den Blasprozess und andererseits durch den Reckdorn ausgeführt.

Letzterer wird durch die Öffnung des Preforms in den sich in der Blasform befindenden Preform eingefahren, bis er das geschlossene Ende, d.h. den Boden, des Preforms erreicht. Die Bewegung des Reckdorns wird fortgeführt, wodurch Druck auf den Boden ausgeübt und der Preform der Länge nach gestreckt (deformiert) wird, bis er die Wand der Blasform erreicht. Durch die Deformation wird der Preform länger, jedoch im Durchmesser kleiner. Da die Berührung mit dem Reckdorn nur unten im Bodenbereich erwünscht ist, wird gleichzeitig eine kleine Menge an Luft eingeblasen, die der Kontraktion entgegen wirkt und eine Berührung und Abkühlung des Preforms im Körperbereich mit dem Streckdorn weitestgehend verhindert. Das Einblasen dieser kleinen Menge an Luft wird meist als das sogenannte Vorblasen bezeichnet. Anschliessend erfolgt das eigentliche Blasen ("Hauptblasen"), wie oben beschrieben.

Berührt der Reckdorn beim Einfahren bereits seitlich im Körperbereich die Innenwand des Preforms, so kühlt dieser an der Kontaktstelle ab, was zum Aufplatzen des Preforms oder zu einer ungleichmässigen Wandstärkenverteilung beim geblasenen Behälter führt, da sich die kühlere Kontaktstelle nicht in gleichem Masse verstrecken lässt. Die Problematik wird durch den Umstand verstärkt, dass der Preform nach Durchlaufen des Ofens weich ist und nach dem Einbringen in die Blasform dort nie ganz gerade positioniert ist. In der Regel sitzt der Preform leicht schief oder nicht ideal zentrisch in der Blasform oder er ist sogar gekrümmt. Es besteht auch die Möglichkeit, dass der Reckdorn nicht ideal zentrisch oder leicht deformiert ist.

Für Flaschen mit einem Fassungsvermögen von einem halben Liter, welche einen Durchmesser von etwa 6 Zentimetern aufweisen können, werden üblicherweise Preforms mit einem Durchmesser von etwa 2 Zentimetern eingesetzt. Ein solcher Durchmesser erlaubt beim Einfahren des Reckdorns einen ausreichenden Abstand zwischen dem Reckdorn und der Innenwand des Preforms, wodurch die oben beschriebene Problematik des lokalen Kontakts nicht auftritt. Bei kleineren Flaschen von z.B. 100 oder 200 Millilitern ist der Durchmesser der Flaschen und damit auch der Durchmesser der Preforms, aus denen diese hergestellt werden, wesentlich kleiner. Entsprechend ist auch die Öffnung, durch welche der Reckdorn einfährt oder zumindest der innere Durchmesser des Preform-Körpers geringer.

Wenn die Öffnung im Preform oder der innere Durchmesser des Preform-Körpers einen Durchmesser von weniger als 1 Zentimeter aufweist, ergeben sich intensive maschinenbauliche Probleme. Wird nämlich der Durchmesser des Reckdorns nur geringfügig kleiner als der Innendurchmesser des Preforms gewählt, so kommt es beim Einfahren des Reckdorns zu einer Berührung und damit zu einer lokalen Abkühlung des Preforms mit den oben beschriebenen Folgen. Ist der Durchmesser des Reckdorns hingegen deutlich kleiner als der Innendurchmesser des Preforms, so ist der Reckdorn den beim Strecken auftretenden Kräften nicht mehr gewachsen und verbiegt sich oder bricht. Ausserdem besteht die Gefahr, dass er wegen seines geringen Durchmessers den Preformboden durchsticht, was ein Recken verunmöglicht.

Eine Recherche hat die Dokumente US4880593, JPS4720855, JP2000246789, JPH05131528, US2008257855, US5213752 und DE302483 zu Tage gefördert, die teilweise Reckdorne mit variablem Umfang offenbaren, die die Innenseite von Preforms beim Einfahren berühren können.

US4880593 und JPH05131528 offenbaren Verfahren, die dem Oberbegriff des Anspruchs 1 entsprechen.

### Aufgabe der Erfindung

Eine Aufgabe der vorliegenden Erfindung besteht darin, zumindest in Teilbereichen streckverfestigte Kunststoffbehälter mit einem geringen Fassungsvermögen bereitzustellen, die in Bezug auf CO₂ dichter sind (verbesserte CO₂-Barriere) als vergleichbare Behälter gleicher Grösse.

Darüber hinaus soll ein Streckblasverfahren vorgeschlagen werden, welches sich insbesondere für die Verarbeitung von Preforms mit kleinem Innendurchmesser und/oder zur Herstellung der beschriebenen Behälter eignet.

Als weiteres Ziel kann das Streckblasverfahren eine stärkere Verstreckung des Preforms ermöglichen, was sich positiv auf die Eigenschaften des daraus hergestellten Behälters auswirkt und es erlaubt, diesem Streckblasverfahren Materialien zuzuführen, die sich bis anhin wegen ihrer beim Strecken verzögerten Streckverfestigung nicht für ein solches Verfahren eigneten.

Weitere Vorteile und Ziele der vorliegenden Erfindung ergeben sich aus der nachfolgenden Beschreibung.

### Darstellung der Erfindung

Die Aufgabe wird gelöst durch ein Streckblasverfahren nach Anspruch 1.

Es ist ein Streckblasverfahren offenbart zur Herstellung eines Kunststoffbehälters aus einem Preform. Der Preform weist einen vorzugsweise länglichen, bevorzugt im Wesentlichen röhrenförmigen, sich entlang einer Mittelachse des Preforms erstreckenden Preformkörper mit einem ersten Ende und einem dem ersten Ende im Wesentlichen gegenüberliegenden zweiten Ende auf. Das erste Ende ist durch einen Preformboden verschlossen, und an das zweite Ende schliesst sich ein Halsteil mit einer Ausgiessöffnung an. Zudem weist der Preform eine Wandung auf, die einen Innenraum des Preforms begrenzt, wobei die Wandung eine Innenseite und eine Aussenseite besitzt. Das Verfahren sieht vor, dass
- der Preformkörper auf mindestens 70° Celsius erwärmt wird,
- der Preform in eine Kavität einer Blasform eingebracht wird,
- ein Reckdorn, der einen Reckdornkörper und eine Reckdornspitze aufweist, in den Preform eingefahren wird, bis die Reckdornspitze den Preformboden erreicht,
- der Preformkörper und der Preformboden durch den Reckdorn in die Kavität hinein gestreckt werden,
- der Preformkörper und der Preformboden durch Einbringen eines Fluids in den Preform unter Druck gemäss der Kavität verformt werden, und
- der Reckdorn, während er in den Preform eingefahren wird, bis er den Preformboden erreicht, die Innenseite der Wandung im Bereich des Preformkörpers an wenigstens einem vorbestimmten Teilbereich berührt. Innerhalb eines sich an die Spitze des Reckdorns anschließenden Bereichs ist die Ausdehnung des Reckdorns mindestens so groß wie die Ausdehnung des Innenraums des Preforms rechtwinklig zur Mittelachse des Preforms innerhalb eines sich an den Boden des Preforms anschließenden Bereichs, der eine Länge von mindestens 5, 10 oder 20 Millimetern parallel zur Mittelachse aufweist. Der Preform weist nach dem Erwärmen des Preforms und/oder beim Einfahren des Reckdorns in den Preform auf der Innenseite der Wandung, insbesondere im Bereich des Preformkörpers, eine um mindestens 5 Grad Celsius höhere Temperatur auf als auf der Aussenseite der Wandung, insbesondere im Bereich des Preformkörpers.

Nachfolgend werden Merkmale beschrieben, wobei diese (individuell) als bevorzugte Merkmale zu betrachten sind, auch wenn sie nicht explizit als solche bezeichnet werden. Die Merkmale seien separat (als Teil einer beliebigen Verfahrens oder eines beliebigen Preforms) und ~ soweit sie sich nicht ausschliessen - in beliebiger Kombination offenbart. Dies schliesst die Möglichkeit der gleichzeitigen Verwirklichung aller beschriebenen Merkmale ein.

Anders als bei bekannten Streckblasverfahren wird nicht versucht, beim Einfahren des Reckdorns eine seitliche Berührung desselben mit der Innenseite des Preformkörpers zu vermeiden. Vielmehr wird eine gleichmässige Berührung und damit auch eine gleichmässige Temperaturveränderung der Innenseite des Preformkörpers durch Berührung mit dem Reckdorn angestrebt. Da sich der Reckdorn beim Einfahren bis an die Innenseite der Wand des Preforms im Bereich des Preformkörpers erstrecken kann, wird auch die weiter oben beschriebene Problematik hinsichtlich dessen Stabilität und in Bezug auf Möglichkeit eines Durchstossens des Preform-Bodens gelöst.

Es besteht die Möglichkeit, kleine, dünne Preforms zu verwenden, die bei gleicher Grösse des herzustellenden Kunststoffbehälters stärker verstreckt werden können. Dadurch können Kunststoffbehälter hergestellt werden, die trotz ihrer geringen Grösse eine ausreichende Streckverfestigung aufweisen.

Zur Verwendung in einem Streckblasverfahren und/oder zur Herstellung von Kunststoffbehältern, wie sie in diesem Dokument beschrieben sind, können beliebige Preforms verwendet werden, die jedoch vorzugsweise eines oder mehrere der Merkmale eines Preforms aufweisen, wie er in diesem Dokument beschrieben ist. Besonders bevorzugt werden zur Verwendung in einem Streckblasverfahren und/oder zur Herstellung von Kunststoffbehältern, wie sie in diesem Dokument beschrieben sind, Preforms verwendet, wie sie in der Anmeldung mit dem Titel "Preforms und Verfahren zur Herstellung von Preforms" mit demselben Anmeldetag wie die vorliegende Anmeldung offenbart sind. Zusätzlich können auch solche Preforms optional Merkmale eines Preforms aufweisen, wie sie im vorliegenden Dokument beschrieben sind. Der Inhalt der besagten Anmeldung sei als Teil des Inhalts der vorliegenden Anmeldung anzusehen.

Durch eine stärkere Verstreckung können beim Kunststoffbehälter verbesserte Barriereeigenschaften insbesondere in Bezug auf CO₂ erzeugt werden. Auch die Anfälligkeit für Stress-Cracking ist vermindert und es wird eine höhere Festigkeit erzielt. Die so hergestellten Behälter können wegen ihrer erhöhten Festigkeit bei gleicher Grösse leichter ausgeführt sein.

Die Veränderung der Materialdichte kann als Mass für die Verstreckung verwendet werden, da durch die Verstreckung die Kristallinität des verstreckten Materials erhöht wird und eine erhöhte Kristallinität mit einer erhöhten Materialdichte einhergeht. Es ist vorgesehen, dass die Materialdichte der Wandung im Bereich des Behälterkörpers im Durchschnitt um mindestens 0,02 g/cm³ (Gramm pro Kubikzentimeter) höher ist als die Materialdichte der Wandung im Bereich des Halsteils, wobei diese Differenz der Materialdichte im Wesentlichen durch die Streckung des Materials der Wandung erzeugt wird. Dies gilt auch für weiter unten genannte alternative Werte für die Differenz.

Vorzugsweise weist der Kunststoffbehälter im Wesentlichen keine sphärolithische Kristallinität auf, wobei die sphärolithische Kristallinität des Kunststoffbehälters und/oder der Wandung im Bereich des Halsteils und/oder der Wandung im Bereich des Behälterkörpers vorzugsweise weniger als 5 oder 3 Prozent beträgt. Eine sphärolithische Kristallinität unterscheidet sich von einer solchen, die durch Verstrecken des Materials erzeugt wurde. Eine sphärolithische Kristallinität kann beispielsweise dadurch erzeugt werden, dass ein Preform in eine heisse Kavität verformt wird.

Aus dem Stand der Technik ist bekannt, dass Behälter mit kleinem Volumen, beispielsweise 0,33 Liter, eine schlechte Barriere gegen CO₂-Verlust von kohlensäurehaltigen Behälterinhalten aufweisen. Der CO₂-Verlust setzt sich zusammen aus Permeation des CO₂ durch die Wandung des Behälters und durch das CO₂, welches durch Kriechen (Deformation) des Behälters und der damit zusammenhängenden Vergrösserung des Behältervolumens entweicht. Durch die Streckverfestigung wird einerseits das Kriechen des Kunststoffs unter dem Einfluss des Behälterinnendrucks, welcher u.a. vom CO₂-Gehalt abhängt, verringert. Andererseits erhöht die Streckverfestigung unabhängig von der Dicke der Behälterwand die CO₂-Barriere und verringert so Permeation. Dies ermöglicht es, die Behälterwand dünner auszugestalten, was solche Behälter leichter macht.

Das Kriechen des Behältermaterials kann beispielsweise mit folgender Testanordnung beobachtet werden: Der Kunststoffbehälter wird mit Wasser gefüllt, welches CO₂ in einer Menge von 8 Gramm pro Liter (g/l) enthält. Anschliessend wird er 24 Stunden lang in einer Klimakammer aufbewahrt, in der eine Temperatur von 22 Grad Celsius und eine relative Luftfeuchtigkeit von 50 Prozent herrschen. Bei einem in diesem Dokument beschriebenen Kunststoffbehälter beträgt die Volumenvergrösserung während der 24 Stunden vorzugsweise weniger als 5 Prozent.

Der Kunststoffbehälter weist eine Wandung mit einer Innenseite und einer Aussenseite auf. Dabei kann vorgesehen sein, dass die Innenseite ein Volumen begrenzt, das kleiner als 300, 200 oder 100 Milliliter ist und/oder der Kunststoffbehälter ein solches Volumen aufweist.

Vorzugsweise besteht der Kunststoffbehälter im Wesentlichen aus der Wandung und/oder die Wandung ist der Kunststoffbehälter. Sollten sich Unklarheiten ergeben, so ist in diesem Dokument (soweit nichts anderes angegeben ist oder sich aus dem Kontext ergibt), wenn von Teilen des Kunststoffbehälters (z.B. Halsteil, Behälterkörper, Behälterboden) die Rede ist, die Wandung des Kunststoffbehälters im Bereich des besagten Teils gemeint.

Soweit nichts anderes angegeben ist oder sich aus dem Kontext ergibt, ist bei Erwähnung des Kunststoffbehälters der fertiggestellte Kunststoffbehälter gemeint.

Ein zur Herstellung des Kunststoffbehälters geeigneter Preform kann einen länglichen, röhrenförmigen, sich entlang einer Mittelachse des Preforms erstreckenden Preformkörper mit einem ersten Ende (insbesondere Längsende) und einem dem ersten Ende im Wesentlichen gegenüberliegenden zweiten Ende (insbesondere Längsende) aufweisen. Das erste Ende ist durch einen Preformboden verschlossen, und an das zweite Ende schliesst sich ein Halsteil mit einer Ausgiessöffnung an, Der Preform weist eine Wandung auf, die einen Innenraum des Preforms begrenzt, wobei die Wandung eine Innenseite und einer Aussenseite aufweist.

Vorzugsweise besteht der Preform im Wesentlichen aus der Wandung und/oder die Wandung ist der Preform. Sollten sich Unklarheiten ergeben, so ist in diesem Dokument (soweit nichts anderes angegeben ist oder sich aus dem Kontext ergibt), wenn von Teilen des Preforms (z.B. Halsteil, Preformkörper, Preformboden) die Rede ist, die Wandung des Preforms im Bereich des besagten Teils gemeint, vorzugsweise im noch unverstreckten Zustand des Preforms, es sei denn, es ist etwas anderes angegeben.

Optional kann der Preform zwischen Halsteil und Preformkörper einen Supportring aufweisen.

Nach einer bevorzugten Variante erstreckt sich mittig zwischen der Innenseite und der Aussenseite der Wandung des Preforms im Bereich des Preformkörpers eine erste mittlere Umfangsfläche, wobei sich ein (kürzester) erster Abstand zwischen der Mittelachse des Preforms und dem am weitesten von der Mittelachse des Preforms entfernten, auf der ersten mittleren Umfangsfläche liegenden Punkt erstreckt. Weiter ist bei dieser Variante vorgesehen, dass sich der Behälterkörper entlang einer Mittelachse des Kunststoffbehälters erstreckt, wobei sich mittig zwischen der Innenseite und der Aussenseite der Wandung des Kunststoffbehälters im Bereich des Behälterkörpers eine zweite mittlere Umfangsfläche erstreckt, wobei sich ein (kürzester) zweiter Abstand zwischen der Mittelachse des Kunststoffbehälters und dem am weitesten von der Mittelachse des Kunststoffbehälters entfernten, auf der zweiten mittleren Umfangsfläche liegenden Punkt erstreckt. Die beschriebene Variante zeichnet sich dann dadurch aus, dass das Verhältnis von dem zweiten Abstand zu dem ersten Abstand größer als 3,8 und/oder kleiner als 6 ist.

Bei den beschriebenen mittleren Umfangsflächen handelt es sich lediglich um Positionsangaben. Es handelt sich dabei nicht um Strukturen, die in der Mitte der Wand des Preforms oder der Wand des Kunststoffbehälters angeordnet sind.

Vorteilhaft kann vorgesehen sein, dass (A) der maximale Umfang (d.h. der Umfang am Ort des grössten Umfangs) oder der durchschnittliche Umfang der Wandung des Kunststoffbehälters im Bereich des Behälterkörpers und (B) der maximale Umfang (d.h. der Umfang am Ort des grössten Umfangs) oder der durchschnittliche Umfang der Wandung des Preforms im Bereich des Preformkörpers in einem Verhältnis (A/B) stehen, das grösser als: 3 oder 3.8 oder 4.5 und/oder kleiner als: 8 oder 6 oder 5 ist.

Die Materialdichte des Kunststoffbehälters kann im Durchschnitt um mindestens: 0,02 oder 0,03 oder 0,04 g/cm³ höher sein, als die Materialdichte des Preforms, aus dem er hergestellt ist.

Eine Messung der Matrialdichte kann beispielsweise nach der Standardtestmethode ASTM D1505-10 (Quelle: ASTM International, 100 Barr Harbor Drive, PO Box C700, West Conshohocken, Pennsylvania 19428-2959, USA) durchgeführt werden.

Der Kunststoffbehälter und/oder der Preform, aus dem er hergestellt ist, kann im Wesentlichen aus einem oder aus mehreren Materialien bestehen und/oder solche beinhalten.

Bei dem einen oder den mehreren Materialien kann es sich um Polymere handeln, die mit Vorteil zur Gruppe der Polyester, Polyamide oder Polyolefine gehören.

Die Polymere können beispielsweise ganz oder teilweise aus Rohöl und/oder aus (vorzugsweise innerhalb von weniger als 1000 Jahren) nachwachsenden biologischen Rohstoffen, insbesondere Pflanzen, hergestellt sein.

Bevorzugte Polymere sind: PET (Polyethylenterephthalat), PEF (Polyethylenfuranoat), PEN (Polyethylennaphthalat), PA (Polyamid), PS (Polystyrol), HDPE ("high-density polyethylene"), LDPE ("low-density polyethylene") und PP (Polypropylen).

Der Kunststoffbehälter und/oder der Preform, aus dem er hergestellt ist, kann im Wesentlichen aus einem Material bestehen, wobei es sich beim Material vorzugsweise um PET oder PEF handelt.

Die Intrinsische Viskosität (IV) des Materials kann mit Vorteil größer als 0,77 oder 0,8 dl/g und/oder kleiner als 0,90 oder 0,84 dl/g sein, wobei 0,8 bis 0,84 dl/g besonders bevorzugt sind.

Eine Messung der Intrinsischen Viskosität (IV) kann beispielsweise nach der Standardtestmethode ASTM D4603 (Quelle: ASTM International, 100 Barr Harbor Drive, PO Box C700, West Conshohocken, Pennsylvania 19428-2959, USA) durchgeführt werden.

Zwar ist PET als ein bevorzugtes Material beschrieben. Die vorliegende Erfindung kann es jedoch ermöglichen, bei Werkstoffen, die noch höhere Reckverhältnisse als PET benötigen, die weiter oben beschriebene Problematik mit dem zu dünnen und damit zu instabilen Reckdorn zu lösen.

Das Streckblasverfahren wird vorzugsweise dazu verwendet, einen Kunststoffbehälter herzustellen, wie er in diesem Dokument beschrieben ist und/oder ein solcher Kunststoffbehälter kann optional mit einem besagten Streckblasverfahren hergestellt sein.

Beim Streckblasverfahren handelt es sich vorzugsweise um ein Streckblasverfahren, bei dem ein Preform verwendet wird, der nach seiner Herstellung in einem Spritzgiessprozess (vorzugsweise auf Raumtemperatur) abgekühlt und optional zwischengelagert wurde. Bei einem solchen Verfahren muss der Preform zuerst erhitzt werden, bevor er in einer Blasform zum Kunststoffbehälter weiterverarbeitet wird. Das Streckblasverfahren wird bevorzugt mittels einer anderen Maschine durchgeführt als die Herstellung des Preforms, d.h. der Spritzgiessprozess.

Beim Herstellungsverfahren (Spritzstreckblasverfahren) einschliesslich der Preform-Herstellung handelt es sich also mit Vorteil um ein 2-Stufen-Spritzstreckblasverfahren.

Beim Streckblasverfahren ist vorgesehen, dass der Preform erwärmt wird, vorzugsweise von aussen.

Die Erwärmung kann zum Beispiel durch Infrarotstrahlung (insbesondere Nahe Infrarotstrahlung) oder Kontaktwärme erfolgen. Wenn im Zusammenhang mit dem Streckblasverfahren von einer Erwärmung oder von Wärme des Preforms gesprochen wird, ist jedoch ausdrücklich nicht die Restwärme aus dem Spritzguss gemeint, die bei einstufigen Verfahren eine Rolle spielt.

Zweckmässigerweise wird der Preform in einem Ofen und/oder ausserhalb der Blasform erwärmt.

Vor der Erwärmung kann der Preform eine durchschnittliche Temperatur von weniger als 60, 40 oder 30 Grad Celsius aufweisen. Es ist nämlich bevorzugt, für das Verfahren Preforms zu verwenden, die nach ihrer Herstellung weitestgehend (vgl. Werte oben) abgekühlt und optional mindestens 15 Minuten im abgekühlten Zustand zwischengelagert wurden, was beim Einstufenprozess (1-Stufen-Spritzstreckblasverfahren), der nicht Gegenstand der vorliegenden Erfindung ist, und bei welchem das Spritzen und Streckblasen in derselben Maschine erfolgt, nicht der Fall ist.

Der Preform und/oder der Preformkörper kann als Teil des vorgeschlagenen Streckblasverfahrens erwärmt werden, bis er eine durchschnittliche Temperatur von mehr als 70 oder 80 Grad Celsius aufweist. Alternativ oder zusätzlich wird der Preform und/oder der Preformkörper erwärmt, bis er eine durchschnittliche Temperatur aufweist, die mindestens 10, 30 oder 40 Grad Celsius über der Glasüberganstemperatur des Materials, aus dem er im Wesentlichen besteht, liegt. Die Erwärmung führt dazu, dass sich der Preform plastisch deformieren lässt. Wie weiter oben beschrieben, sind bevorzugte Materialgruppen zum Beispiel Polyester, Polystyrole und Polyamide. Bei Polyolefinen (z.B. PE oder PP) liegt die Glasübergangstemperatur sehr tief, teilweise unter 0°C, trotzdem lassen sich diese meist erst nahe dem Schmelzpunkt gut plastisch deformieren. Handelt es sich beim Material des Preforms um ein Polyolefin, so wird der Preform und/oder der Preformkörper deshalb mit Vorteil auf eine Temperatur von 5 bis 50°C unter dem Schmelzpunkt des Materials erwärmt.

Erfindungsgemäss weist der Preform nach dem Erwärmen des Preforms und/oder beim Einfahren des Reckdorns in den Preform auf der Innenseite der Wandung, insbesondere im Bereich des Preformkörpers, eine um mindestens 5, 10, 15 oder 18 Grad Celsius höhere Temperatur auf, als auf der Aussenseite der Wandung, insbesondere im Bereich des Preformkörpers. Auf diese Weise kann erreicht werden, dass der Preform trotz Kontakt mit dem Reckdorn und der damit verbundenen Abkühlung plastisch bleibt und im Streckblasprozess gestreckt und geblasen werden kann. Dies kann beispielsweise erreicht werden, indem der Preform während der Erwärmung nur oder zumindest in stärkerem Masse auf seiner Aussenseite durch Luftkonvektion mit Gebläsen gekühlt wird. Optional kann durch die Ofenstruktur eine Zirkulation bewirkt werden, die einen Wärmeverlust über die Innenseite des Preforms nicht oder nur in geringerem Masse zulässt, als über die Aussenseite des Preforms. Durch die Überhitzung auf der Innenseite wird die Gefahr, dass wegen der Abkühlung durch den Kontakt mit dem Reckdorn ein Blasen des Preforms erschwert oder verunmöglicht wird, reduziert.

Nach einer zweckmässigen Variante ist vorgesehen, dass die Innenseite der Wandung, insbesondere im Bereich des Preformkörpers, nach der Erwärmung eine Temperatur von mindestens 100 Grad Celsius aufweist.

Wenn es sich beim Material des Preforms um Polyester handelt, so kann der Preform zum Beispiel nach der Erwärmung eine Temperatur von mehr als 100, 110 oder 115 Grad Celsius und/oder weniger als 180, 170 oder 160 Grad Celsius auf der Innenseite der Wand, insbesondere im Bereich des Preformkörpers, aufweisen. Besonders bevorzugt ist eine Temperatur von 100 bis 150 Grad Celsius, wenn der Preform aus PET hergestellt ist und von 105 bis 155 Grad Celsius, wenn der Preform aus PEF hergestellt ist.

Es kann vorgesehen sein, dass der Reckdorn vor dem Einfahren in den Preform ausserhalb der Blasform erhitzt wird, bevorzugt auf eine Temperatur von mindestens 80°C, idealerweise auf 10°C über der Glasübergangstemperatur bei einem Polyester.

Nach der Erwärmung des Preforms wird der Preform in die Kavität einer Blasform eingebracht. Die Form der Kavität definiert die Form des aus dem Preform herzustellenden Kunststoffbehälters. Die Blasform besitzt üblicherweise eine Öffnung, die in die Kavität führt, wobei der Preform in dieser Öffnung positioniert wird. Das geschlossene Ende (erstes Ende) des Preformkörpers ragt dabei in die Kavität oder ist der Kavität zumindest zugewandt. Die Ausgiessöffnung des Preforms ist nach aussen gerichtet und damit für den Reckdorn zugänglich.

Durch die Ausgiessöffnung des Preforms wird der Reckdorn in den Preform eingefahren, bis er den der Ausgiessöffnung gegenüberliegenden Preformboden erreicht. Der Reckdorn weist einen Reckdornkörper und eine Reckdornspitze auf, wobei die Reckdornspitze mit dem Preformboden in Kontakt tritt, wenn der Reckdorn den Preformboden erreicht.

Es ist vorgesehen, dass der Reckdorn, während er in den Preform eingefahren wird, die Innenseite der Wandung des Preforms im Bereich des Preformkörpers an wenigstens einem vorbestimmten Teilbereich berührt. Beim weiter oben beschriebenen Spritzblasverfahren gemäss dem Stand der Technik erfolgt kein Einfahren des Reckdorns im Sinne der Erfindung. Beim Spritzblasverfahren verbleibt der Preform auf dem Spritzkern, der zum Fertigen der Flasche in Richtung der Blasformbodens sich geringfügig verschieben kann.

Nach einer Variante berührt der Reckdorn, während er in den Preform eingefahren wird, die Innenseite der Wandung im Bereich des Preformkörpers, wobei zwischen der genannten Innenseite und dem Reckdorn ein über den Umfang im Wesentlichen gleichmäßiger Wärmeaustausch stattfindet. Beim genannten Umfang handelt es sich um den unten beschriebenen inneren Umfang des Preformkörpers und/oder den (äusseren) Umfang des Reckdorns im Bereich des Reckdornkörpers.

Es ist von Vorteil, wenn der Reckdorn und der Preform sich über eine Länge (gemessen entlang der Mittelachse des Preforms) von mindestens 20 Millimeter, vorzugsweise mindestens 30 Millimeter berühren, während der Reckdorn in den Preform eingefahren wird.

Vorzugsweise berührt der Reckdorn, während er in den Preform eingefahren wird, den Preform entlang eines inneren Umfangs des Preformkörpers und/oder entlang eines (äusseren) Umfangs des Reckdorns im Bereich des Reckdornkörpers. Der innere Umfang des Preformkörpers ist definiert durch eine Linie entlang der Innenseite der Wandung des Preforms im Bereich des Preformkörpers, wobei die Linie in einer rechtwinklig zur Mittelachse des Preforms angeordneten Ebene liegt. Der (äussere) Umfang des Reckdorns ist definiert durch eine Linie entlang der Aussenseite des Reckdorns im Bereich des Reckdornkörpers, wobei die Linie in einer rechtwinklig zur Mittelachse des Reckdorns angeordneten Ebene liegt.

Mit Vorteil berührt der Reckdorn, während er in den Preform eingefahren wird, den Preform im Wesentlichen entlang des gesamten (oder zumindest des grössten Teils des) inneren Umfangs des Preformkörpers und/oder in regelmässigen Abständen entlang des inneren Umfangs des Preformkörpers.

Es ist wünschenswert, wenn der Reckdorn, während er in den Preform eingefahren wird, den Preform im Wesentlichen entlang des gesamten (oder zumindest des grössten Teils des) äusseren Umfangs des Reckdorns und/oder in regelmässigen Abständen entlang des äusseren Umfangs des Reckdorns berührt.

Bevorzugt berührt der Reckdorn, während er in den Preform eingefahren wird, den Preform an mehreren (z.B. 2, 3, 4 oder mehr) Stellen entlang des (äusseren) Umfangs des Reckdorns und/oder entlang des inneren Umfangs des Preformkörpers.

Nach einer Variante können die Stellen, an denen der Reckdorn den Preform berührt, sich beim Einfahren des Reckdorns (unter fortwährendem Kontakt zwischen Reckdorn und Preform) parallel zur Mittelachse des Preforms entlang der Innenseite der Wand des Preforms bewegen.

Bevorzugt berührt der Reckdorn, während er in den Preform eingefahren wird, die Innenseite der Wandung des Preforms im Bereich des Preformkörpers an zwei einander in Bezug auf die Mittelachse des Preforms im Wesentlichen gegenüberliegenden Stellen.

Nach einer Variante kann vorgesehen sein, dass der Reckdornkörper eine Aussenseite mit einer Außenkontur (dreidimensionale Oberflächenstruktur) aufweist, die derart ausgebildet ist, dass die Innenseite der Wandung des Preforms im Bereich des Preformkörpers an zumindest zwei im Wesentlichen einander in Bezug auf die Mittelachse des Preforms gegenüberliegenden, sich im Wesentlichen entlang der Mittelachse des Preforms erstreckenden Teilbereichen durch die Aussenseite des Reckdornkörpers berührt wird, während der Reckdorn in den Preform eingefahren wird.

Das Streckblasverfahren kann sich vorteilhaft dadurch auszeichnen, dass die Aussenseite des Reckdorns, insbesondere im Bereich des Reckdornkörpers, oder die Innenseite der Wandung des Preforms im Bereich des Preformkörpers entlang der Einfahrrichtung verlaufende Stege aufweist, die während des Einfahrens des Reckdorns den Kontakt zwischen Reckdorn und Preform herstellen.

Es besteht die Möglichkeit, dass die Innenseite der Wandung des Preforms je nach Temperatur des Reckdorns an den Stellen, an denen sie vom Reckdorn beim Einfahren berührt wird, durch den Kontakt mit dem Reckdorn entweder lokal erhitzt oder abgekühlt wird. Auf diese Weise wird es zum Beispiel ermöglicht, beim herzustellenden Kunststoffbehälter ein Wandstärkenprofil zu erzeugen, das entweder geplante Dick- und Dünnstellen in der Flaschenachse runder Flaschen aufweist, oder eine gleichmässige Wandstärkenverteilung einer ovalen Flasche.

Nach einer Variante berührt der Reckdorn zum Zeitpunkt, wenn er den Preformboden erreicht, die Innenseite der Wandung im Bereich des Preformkörpers auf mindestens 30, 50 oder 70 Prozent ihrer Fläche und/oder er füllt zu diesem Zeitpunkt den Preformkörper im Wesentlichen aus.

Es kann auch zweckmässig sein, wenn der Reckdorn, während er in den Preform eingefahren wird, die Innenseite der Wandung im Bereich des Preformkörpers an den Berührungsstellen (d.h. dort, wo der Reckdorn die genannte Innenseite berührt) auf eine Temperatur zwischen 0 und 40°C über der Glasüberganstemperatur bei Polyestern, Polyamiden und Polystyrol abkühlt, bzw. bei Polyolefinen auf eine Temperatur zwischen 0 und 50°C unter dem Schmelzpunkt.

Es kann vorgesehen sein, dass der Reckdorn sich entlang einer Mittelachse des Reckdorns erstreckt und dass in einem sich an die Reckdornspitze anschliessenden Bereich die Ausdehnung des Reckdornkörpers rechtwinklig zur Mittelachse des Reckdorns mindestens so gross ist wie die Ausdehnung des Innenraums des Preforms rechtwinklig zur Mittelachse des Preforms in einem sich (in unverstrecktem Zustand des Preforms) an den Preformboden anschliessenden Bereich des Preformkörpers. Mit Vorteil ist die besagte Ausdehnung des Innenraums kleiner als 7 Millimeter, bevorzugt kleiner als 6 Millimeter oder kleiner als 5 Millimeter, und besonders bevorzugt 3 bis 4 Millimeter.

Alternativ oder zusätzlich existieren ein (äusserer) Umfang des Reckdorns (vgl. Definition weiter oben) und ein innerer Umfang des Preformkörpers (vgl. Definition weiter oben), so dass gilt: Die durch den genannten (äusseren) Umfang des Reckdorns definierte Querschnittsfläche des Reckdorns beträgt mehr als 90, 100 oder 102 Prozent der durch den genannten inneren Umfang des Preformkörpers definierten inneren Querschnittsfläche des Preforms.

Bevorzugt ist der genannte (äussere) Umfang und/oder die genannte Querschnittsfläche des Reckdorns weniger weit von der Reckdornspitze entfernt als der genannte innere Umfang und/oder die genannte innere Querschnittsfläche des Preforms von der Innenseite des Preformbodens entfernt ist.

Nach einer Variante können die beiden am weitesten voneinander entfernten Punkte der gennannten Querschnittsfläche des Preforms und/oder des genannten Querschnittsfläche des Reckdorns weniger als 7, 6 oder 5 Millimetern voneinander entfernt sein. Alternativ oder zusätzlich kann die genannte Querschnittsfläche des Preforms und/oder der genannten Querschnittsfläche des Reckdorns kleiner als 40, 35 oder 30 Quadratmillimeter sein.

Es kann vorgesehen sein, dass der Reckdorn, während er in den Preform eingefahren wird, durch Kontakt mit dem Preform den Preformkörper aufweitet und/oder den (inneren und/oder äusseren) Umfang des Preformkörpers vergrössert (beispielsweise um mindestens 2, 5 oder 10 Prozent) und/oder den Innenraum des Preforms vergrössert (beispielsweise um mindestens 2, 5 oder 10 Prozent).

Alternativ oder zusätzlich kann vorgesehen sein, dass der Reckdorn, während er in den Preform eingefahren wird, die Länge des Preforms (gemessen entlang der Mittelachse des Preforms) vergrössert (beispielsweise um mindestens 1, 2 oder 5 Prozent und/oder höchstens 20 oder 10 Prozent). Dadurch, dass der Reckdorn mit dem Preform in Kontakt tritt, bevor der Reckdorn den Preformboden erreicht, kann er - vereinfacht ausgedrückt - den Preform "mitziehen".

Nach einer Ausgestaltungsform ist die Querschnittsfläche des Innenraums des Preforms im Bereich des Preformkörpers 0,5 bis 5% kleiner als die Querschnittsfläche des Reckdorns und der Preform wird, während der Reckdorn in den Preform eingefahren wird, aufgeweitet und zwar sowohl im Durchmesser als auch in der Länge. Dadurch wird der Preform bereits vor dem eigentlichen Reckprozess deformiert und die Moleküle bereits ausgerichtet. Man kann in diesem Falle, von einer kleinen Vorverstreckung sprechen.

Zur Unterscheidung der einzelnen Verfahrensschritte sei festgelegt: Wenn in diesem Dokument davon die Rede ist, dass der Reckdorn in den Preform eingefahren wird, so sei damit das Einfahren des Reckdorns in den Preform bis zum Erreichen des Preformbodens gemeint, d.h. bis die Reckdornspitze in Kontakt mit dem Preformboden tritt. Wenn davon die Rede ist, dass der Preformkörper und der Preformboden durch den Reckdorn (in die Kavität hinein) gestreckt werden, so sei damit das weitere Einfahren des Reckdorns in die Kavität gemeint, d.h. ab dem Zeitpunkt, wenn die Reckdornspitze den Preformboden erreicht. Das Erreichen des Preformbodens markiert also den Übergang vom "Einfahren" zum "Strecken".

Gemäss einer bevorzugten Ausgestaltung handelt es sich beim oben genannten Preform um einen Preform im Zustand wenn der Reckdorn in den Preform eingefahren wird.

Der Preformkörper ist vorzugsweise im Wesentlichen zylindrisch, insbesondere kreiszylindrisch. Im Übergangsbereich vom Preformkörper zum Halsteil kann optional ein Supportring vorgesehen sein.

Nach einer Variante kann der Preform auf der Innenseite der Wandung, insbesondere im Bereich des Preformkörpers, mindestens 2, 4 oder 8 Stege aufweisen, die entlang der Mittelachse des Preforms verlaufen und vorzugsweise gleichmässig entlang des inneren Umfangs des Preforms verteilt angeordnet sind.

Es kann auch vorgesehen sein, dass der Reckdorn und/oder der Reckdornkörper auf seiner Aussenseite mindestens 2, 4 oder 8 Stege aufweist, die entlang der Mittelachse des Reckdorns verlaufen und vorzugsweise gleichmässig entlang des (äusseren) Umfangs des Reckdorns verteilt angeordnet sind.

Vorzugsweise tritt der Reckdorn, während der Reckdorn in den Preform eingefahren wird, via die Stege in Kontakt mit der Innenseite der Wandung im Bereich des Preformkörpers, während die Bereiche zwischen den Stegen nicht in Kontakt mit dem Preform treten. Eine solche Ausführung kann zum Beispiel dazu dienen, die Wärmeübertragung zwischen Preform und Reckdorn zu reduzieren.

Der Reckdorn kann auf seiner Aussenseite eine wärmeisolierende und/oder haftvermindernde Schicht aufweisen.

Die haftvermindernde Schicht weist zweckmässigerweise einen geringeren Haftreibungskoeffizienten und/oder einen geringeren Gleitreibungskoeffizienten auf, als die besagte Aussenseite des Reckdorns ohne die besagte haftvermindernde Schicht. Die haftvermindernde Schicht kann in fester Form, vorzugsweise in der Form einer Teflon-Schicht, vorliegen. Es besteht aber auch die Möglichkeit, dass die haftvermindernde Schicht in flüssiger Form vorliegt, vorzugsweise als Gleitmittel (z.B. Schmiermittel wie Öl oder Fett). Das Gleitmittel kann optional vor oder während des Verfahrens aufgetragen und/oder ersetzt werden, vorzugsweise in regelmässigen Abständen oder nach jedem Blasvorgang. Eine solche haftvermindernde Schicht kann das Eindringen des Reckdorns in den Preform erleichtern.

Die wärmeisolierende Schicht ist zweckmässigerweise dazu ausgebildet, die Wärmeübertragung zwischen Reckdorn und Preform zu reduzieren. Die wärmeisolierende Schicht weist zu diesem Zweck eine geringere Wärmeleitfähigkeit auf, als die besagte Aussenseite des Reckdorns ohne die besagte wärmeisolierende Schicht. Eine solche Schicht kann die Abkühlung des Preforms durch den Kontakt mit dem Reckdorn vermindern.

Die beschriebene wärmeisolierende Schicht kann auch gleichzeitig eine haftvermindernde Schicht sein.

Das Gesagte kann insbesondere auf den in den Preform und/oder den Preformkörper einfahrenden Teil des Reckdorns zutreffen.

Es kann vorgesehen sein, dass der Reckdorn erwärmt wird, bevor er in den Preform eingefahren wird. Auf diese Weise kann der Wärmeverlust des Preforms beim Kontakt mit dem Reckdorn reduziert werden.

Es ist auch möglich, bei einer Durchführung des Verfahrens den Reckdorn zu erwärmen, bevor er in den Preform eingefahren wird, wobei bei einer optionalen unmittelbar vorhergehenden Durchführung des Verfahrens und/oder einer optionalen sich unmittelbar anschliessenden Durchführung des Verfahrens keine solche Erwärmung vor dem Einfahren in den Preform durchgeführt wird.

Wird das Verfahren mehrfach unmittelbar aufeinanderfolgend durchgeführt, kann der Reckdorn auch bei jeder Durchführung des Verfahrens erwärmt werden, bevor er in den Preform eingefahren wird, oder nur bei der ersten Durchführung des Verfahrens. Im letzteren Fall ist es möglich, dass bei einer oder mehreren nachfolgenden Durchführungen des Verfahrens der Reckdorn durch den Kontakt mit dem erwärmten Preform erwärmt wird. Auf diese Weise ist keine erneute Erwärmung des Reckdorns vor dem Einfahren in den Preform notwendig.

Der Preform wird durch den Reckdorn in die Kavität hinein gestreckt, vorzugsweise bis zur Innenwand der Kavität, welche der Öffnung in der Blasform gegenüberliegt.

Es ist bei diesem Verfahren nicht unbedingt erforderlich, dass der Preform bei der Verstreckung vorgeblasen wird, um den Reckdorn nicht einseitig zu berühren, da dieser bereits den Preform berührt.

Zusätzlich kann es aber sinnvoll sein, den Preform vorzublasen, wobei ein Teil des Preforms durch das Vorblasen sich vom berührenden Reckdorn löst, wobei ein Teil des Preformkörpers mit dem Reckdorn in Berührung bleibt, während der Preformkörper und der Preformboden durch den Reckdorn in die Kavität hinein gestreckt werden, speziell wenn ein Teil der Vorblase an der Blasform frühzeitig erkalten soll, um eine spezielle Wandstärkenverteilung beim herzustellenden Kunststoffbehälter zu erreichen, bzw. an einer sehr heissen Blasform kristallisieren soll, um eine spezielle Kristallisation der betroffenen Stelle zu erreichen.

Das Vorblasen (während der Preform durch den Reckdorn in die Kavität hinein gestreckt wird) und das beschriebene (Haupt-)Blasen (nach dem Strecken und/oder nachdem der Reckdorn vollständig und/oder bis zur Innenwand der Kavität in die Kavität eingefahren ist) sind im vorliegenden Falle nicht unbedingt an eine Einbringung eines Fluids durch die Blasdüse gebunden, welche üblicherweise nicht Bestandteil des Reckdorns ist. Durch Löcher im Reckdorn können der Preform durch das austretende Fluid gezielt lokal abgekühlt und so gezielte Dünn- und Dickstellen am herzustellenden Kunststoffbehälter erzeugt werden.

Vorzugsweise legt die Reckdornspitze, während der Preform durch den Reckdorn in die Kavität hinein gestreckt wird, einen Weg zurück, der mehr als 10, 15 oder 20 Millimeter und/oder weniger als 300, 250 oder 200 Millimeter beträgt.

Es ist bevorzugt, dass der (innere und/oder äussere) Umfang des Preformkörpers nicht abnimmt, während der Preform durch den Reckdorn in die Kavität hinein gestreckt wird.

Nach dem Strecken und/oder wenn der Reckdorn vollständig und/oder bis zur Innenwand der Kavität in die Kavität eingefahren ist, kann der Reckdornkörper im Wesentlichen mindestens bis zur Ausgiessöffnung des gestreckten Preforms als Zylinder ausgebildet sein.

Nach dem Strecken durch den Reckdorn wird der Preform durch Einblasen eines Fluids (vorzugsweise eines Gases wie Luft) in den Preform gemäss der Kavität verformt ("(Haupt-)Blasen"). Hierdurch entsteht der herzustellende Kunststoffbehälter, dessen äussere Form im Wesentlichen der Form der Kavität entspricht. Soweit nichts anderes angegeben ist oder sich aus dem Kontext ergibt, ist in diesem Dokument, wenn vom Einbringen des Fluids die Rede ist, dieser Verfahrensschritt gemeint ("Hauptblasen").

Das Fluid wird unter Druck in den Preform eingebracht, wobei der Druck grösser ist, als der auf die Aussenseite der Wandung des Preforms im Bereich des Preformkörpers wirkende Druck. Der Druck kann beim Vorblasen beispielsweise 1 bis 10 bar betragen. Beim Hauptblasen kann der Druck beispielsweise 10 bis 40 bar betragen.

Nach einer Variante kann das Einbringen des Fluids über die Reckdornspitze erfolgen.

Es kann vorgesehen sein, dass der Reckdornkörper wenigstens eine sich im Wesentlichen bis zur Reckdornspitze oder in die Reckdornspitze hinein erstreckende Nut aufweist, die derart ausgestaltet ist, dass das Fluid von der Ausgiessöffnung des Preforms bis zum Preformboden einbringbar ist, wenn der Reckdorn den Preformkörper und den Preformboden in die Kavität hinein bis zur Innenwandung der Kavität gestreckt hat.

Alternativ oder zusätzlich ist im Bereich des Reckdornkörpers eine auf der Aussenseite des Reckdorns entlang der Mittelachse des Reckdorns verlaufende Nut vorgesehen, durch welche das Fluid beim Einbringen in den Preform vom Preformboden bis zur Ausgiessöffnung des Preforms verteilt wird.

Der Reckdorn kann ohne Kühlgänge und/oder ohne Hohlräume ausgeführt sein. Alternativ kann der Reckdorn aber auch hohl sein. Das Fluid kann so durch den Hohlraum im Reckdorn zur Spitze des Reckdorns befördert und dort in den Preform eingeblasen werden, wodurch der Preform gemäss der Kavität aufgeblasen werden kann.

Beim in den Preform eingebrachten Fluid kann es sich um ein in den Preform eingeblasenes Gas handeln, insbesondere um Luft.

Der Kunststoffbehälter kann nach Abschluss des Streckblasverfahrens aus der Blasform entnommen werden, wodurch die Blasform für die Aufnahme eines neuen Preforms und die Wiederholung der Verfahrensschritte bereit ist.

Das Streckblasverfahren kann ein oder mehr Male widerholt werden, wobei für jede Durchführung des Verfahrens ein neuer Preform verwendet wird.

Unter anderem sind demnach offenbart:
(A) Ein Kunststoffbehälter, der durch ein 2-Stufen-Spritzstreckblasverfahren aus einem Preform hergestellt ist, mit einem Halsteil mit einer Ausgiessöffnung, einem Behälterboden, einem sich zwischen dem Halsteil und dem Behälterboden erstreckenden Behälterkörper und einer Wandung mit einer Innenseite und einer Aussenseite, dadurch gekennzeichnet, dass die Innenseite ein Volumen begrenzt, das größer als 50 und kleiner als 400 Milliliter ist, wobei die Wandung zumindest in Teilbereichen streckverfestigt ist, wobei durch die Streckverfestigung die Materialdichte der Wandung im Bereich des Behälterkörpers im Durchschnitt um mindestens 0,02 g/cm³ höher ist als die Materialdichte der Wandung im Bereich des Halsteils, und wobei der Kunststoffbehälter im Wesentlichen keine sphärolithische Kristallinität aufweist.
(B) Ein Kunststoffbehälter nach (A), dadurch gekennzeichnet, dass die Innenseite ein Volumen begrenzt, das kleiner als 300 Milliliter ist, wobei ein Volumen kleiner als 200 Milliliter und insbesondere kleiner als 100 Milliliter bevorzugt ist.
(C) Ein Kunststoffbehälter nach (A) oder (B), dadurch gekennzeichnet,
   - dass der Preform einen länglichen, röhrenförmigen, sich entlang einer Mittelachse des Preforms erstreckenden Preformkörper mit einem ersten Ende und einem dem ersten Ende im Wesentlichen gegenüberliegenden zweiten Ende aufweist, wobei das erste Ende durch einen Preformboden verschlossen ist und sich an das zweite Ende ein Halsteil mit einer Ausgiessöffnung anschließt, und mit einer einen Innenraum des Preforms begrenzenden Wandung mit einer Innenseite und einer Aussenseite, wobei sich mittig zwischen der Innenseite und der Aussenseite der Wandung im Bereich des Preformkörpers eine erste mittlere Umfangsfläche erstreckt, wobei sich ein erster Abstand zwischen der Mittelachse des Preforms und einem am weitesten von der Mittelachse des Preforms entfernten und auf der ersten mittleren Umfangsfläche liegenden Punkt erstreckt, und
   - dass sich der Behälterkörper entlang einer Mittelachse des Kunststoffbehälters erstreckt, wobei sich mittig zwischen der Innenseite und der Aussenseite der Wandung im Bereich des Behälterkörpers eine zweite mittlere Umfangsfläche erstreckt, wobei sich ein zweiter Abstand zwischen der Mittelachse des Kunststoffbehälters und einem am weitesten von der Mittelachse des Kunststoffbehälters entfernten und auf der zweiten mittleren Umfangsfläche liegenden Punkt erstreckt,
   - wobei ein Verhältnis von dem zweiten Abstand zu dem ersten Abstand größer als 3,8 ist.
(D) Ein Kunststoffbehälter nach (A), (B) oder (C), dadurch gekennzeichnet, dass er im Wesentlichen aus einem Material besteht, wobei es sich beim Material um PET oder PEF handelt.
(E) Ein Kunststoffbehälter nach (D), dadurch gekennzeichnet, dass die Intrinsische Viskosität (IV) des Materials größer als 0,77 dl/g und kleiner als 0,87 dl/g gemessen nach ASTM D4603 ist.

Es sei darüber hinaus eine Streckblasmaschine offenbart, welche eine Blasform und einen Reckdorn aufweist. Die Blasform weist eine Kavität und eine Öffnung zur Aufnahme eines Preforms auf, wobei die Öffnung in die Kavität führt.

Die Streckblasmaschine kann optional zur Durchführung des in diesem Dokument beschriebenen Verfahrens verwendet werden und/oder weitere Merkmale einer Streckblasmaschine aufweisen, wie sie in diesem Dokument beschrieben sind.

Ist in diesem Dokument das Vorhandensein eines Gegenstands erwähnt, so schliesst dies nicht das Vorhandensein zusätzlicher Gegenstände derselben Art aus. Anders ausgedrückt seien bei Erwähnung eines Gegenstands jeweils "mindestens ein" solcher Gegenstand und "ein oder mehrere" solcher Gegenstände offenbart. Einer, zwei, drei oder mehr oder sogar alle der zusätzlichen Gegenstände können optional dieselben Merkmale wie der eine Gegenstand aufweisen.

Sollte eine Angabe zu einer Norm nicht eindeutig sein, so ist die zum Zeitpunkt der Anmeldung aktuellste Version der Norm mit der der angegebenen Bezeichnung ähnlichsten Bezeichnung gemeint.

Aktionen, die in der Form von Eignungen, Fähigkeiten, Eigenschaften oder Funktionen der in diesem Dokument beschriebenen Vorrichtung (oder deren Teile) offenbart sind, seien auch (unabhängig und in beliebiger Kombination) als Verfahrensschritte des Verfahrens offenbart und zwar abhängig und unabhängig von der entsprechenden Vorrichtung oder dem entsprechenden Vorrichtungsteil.

Es sei zudem die Verwendung von Merkmalen der beschriebenen Vorrichtungen oder Vorrichtungsteile (unabhängig und in beliebiger Kombination) als Verfahrensschritte des Verfahrens offenbart.

Umgekehrt können die offenbarten Vorrichtungen oder Vorrichtungsteile Mittel aufweisen, die einen oder mehrere der im Zusammenhang mit dem offenbarten Verfahren genannten Verfahrensschritte durchführen können und/oder dazu ausgebildet sind.

Zudem seien die nachfolgenden Patentansprüche zusätzlich jeweils mit einem Rückbezug auf jeden beliebigen der vorhergehenden Patentansprüche ("nach einem der vorhergehenden Ansprüche") offenbart, auch wenn sie nicht in dieser Form beansprucht sind.

### Kurze Beschreibung der Zeichnungen

Es zeigt in schematischer, nicht massstabsgetreuer Darstellung:
- Fig. 1: einen Preform im Längsschnitt;
- Fig. 2: den Preform gemäss Fig.1 mit einem den Preform gleichmässig berührenden Reckdorn;
- Fig. 3a: den Preform gemäss Fig.1 mit einem vom Preform gleichmässig beabstandeten Reckdorn gemäss Stand der Technik;
- Fig. 3b: den Preform gemäss Fig.1 mit einem den Preform ungleichförmig berührenden Reckdorn gemäss Stand der Technik; und
- Fig. 4: verschiedene Reckdorn-Typen.

### Ausführung der Erfindung

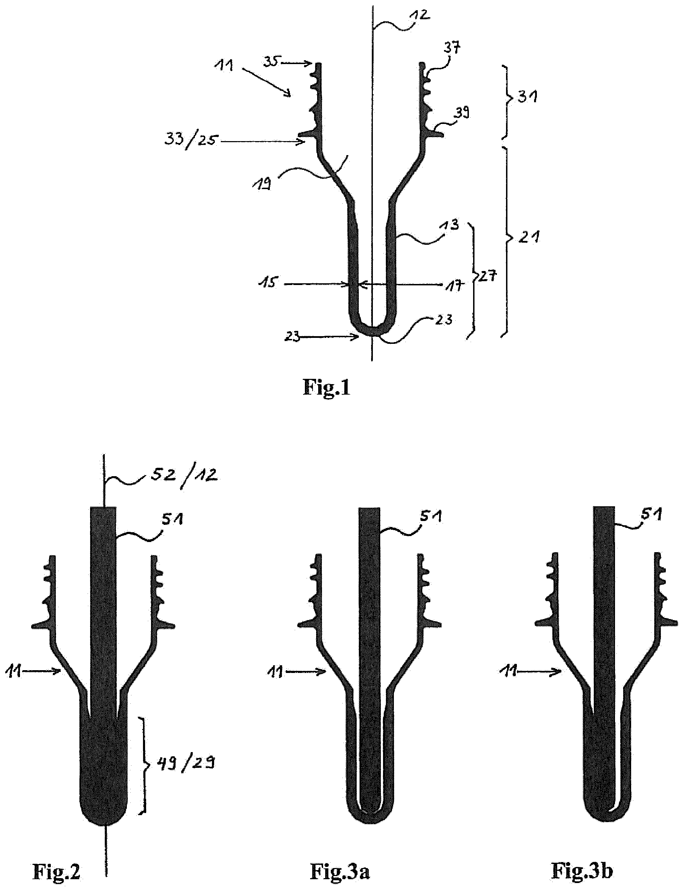

Die Erfindung wird nachfolgend anhand der Zeichnungen beispielhaft erläutert. Die Fig. 1 stellt einen Preform dar, welcher dazu ausgebildet ist, in einem Streckblasverfahren zu einem Kunststoffbehälter weiterverarbeitet zu werden. Die Fig. 2, 3a und 3b zeigen den Preform aus Fig.1 sowie jeweils einen in den Preform eingefahrenen Reckdorn und dienen der Erläuterung des Streckblasverfahrens.

Bezug nehmend auf die Fig.1 weist der Preform 11 einen Preformkörper 21 und ein damit verbundenes Halsteil 31 auf. Die Mittelachse 12 des Preforms 11 verläuft durch ein erstes Ende 23 und ein zweites Ende 25 des Preformkörpers 21, wobei das erste Ende 23 des Preformkörpers 21 durch einen Boden 23 des Preforms 11 verschlossen ist. Das Halsteil 31 weist eine Ausgiessöffnung 35 auf und schliesst sich an das zweite offene Ende 25 des Preformkörpers 21 an.

Beim vorgeschlagenen Preform 11 beträgt auf einer Länge der Mittelachse 12 von mindestens 20, 30 oder 50 Millimetern der maximale Abstand der Innenseite 17 der Preformwand 13 von der Mittelachse 12 weniger als 3,5 oder 3 oder 2,5 Millimeter. Diese bevorzugte Dimensionierung ist jedoch nicht zwingend.

Weitere vorteilhafte Merkmale des Preforms 11 umfassen, wie in Fig.1 dargestellt, ein Gewinde 37 und einen Supportring 39 am Halsteil 31. Das Gewinde 37 erlaubt das spätere Anbringen eines (nicht dargestellten) Deckels an der Ausgiessöffnung des aus dem Preform 11 herzustellenden Kunststoffbehälters. Der Supportring 39 erleichtert die Handhabung des Preforms 11, was insbesondere bei einem zweistufigen Spritzstreckblasverfahren (2-Stufen-Spritzstreckblasverfahren), wie es zur Herstellung des Preforms 11 und (daraus) des Kunststoffbehälters vorgesehen ist, Vorteile bringt. Bei einem solchen zweistufigen Verfahren wird der Preform 11 nach seiner Herstellung auf Raumtemperatur abgekühlt und erst später in einem Streckblasverfahren zu einem Kunststoffbehälter weiterverarbeitet. Der Preform 11 ist einstückig durch Spritzguss aus einem Polyester hergestellt, wobei dies auch für das Gewinde 37 und den Supportring 39 gilt, die auf der Aussenseite 15 der Wand 13 des Preforms 11 angeordnet sind. Wie der Preformkörper 21 weist auch das Halsteil 31 ein erstes Ende 33 und ein zweites Ende 35 auf, wobei das erste Ende 33 des Halsteils 31 mit dem zweiten Ende 25 des Preformkörpers 21 verbunden ist und das zweite Ende 35 des Halsteils 35 die Ausgiessöffnung aufweist. Letztere führt in den Innenraum 19 des hohlen Preforms 11, wobei sich der Innenraum 19 von der Ausgiessöffnung bis zum Boden des Preforms 11 erstreckt. Der Innenraum 19 wird von der Innenseite 17 (d.h. der inneren Oberfläche) der Wand 13 begrenzt, welche auch eine Aussenseite 15 (d.h. eine äussere Oberfläche) aufweist. Der Abstand zwischen der Innenseite 17 und der Aussenseite 15 ist die Wandstärke. Diese kann optional im Bereich des Preformkörpers 21 im Durchschnitt grösser sein, als im Bereich des Halsteils 31, wobei Strukturen auf der Aussenseite 15 der Wand 13, wie das Gewinde 37 und der Supportring 39 bei der Beurteilung der Wandstärke ausser Acht zu lassen sind. Normalerweise wird bei der Herstellung des Kunststoffbehälters aus dem Preform 11 nämlich nur der Preformkörper 21 gestreckt und geblasen, weshalb in diesem Bereich mehr Material benötigt wird. Der Innenraum 19 kann optional im Bereich des Halsteils 31 einen grösseren Querschnitt aufweisen, als im Bereich des Preformkörpers 21, wobei unter dem Querschnitt die Querschnittsfläche rechtwinklig zur Mittelachse 12 zu verstehen ist. Die Mittelachse 12 des Preforms 11 verläuft von der Ausgiessöffnung zum Boden, wobei sie im Wesentlichen gleichen Abstand von einander in Bezug auf die Mittelachse 12 gegenüberliegenden Punkten der Innenseite 17 hat, also im Wesentlichen in der Mitte des Innenraums 19 verläuft. Im sich an das Halsteil 31 anschliessenden Bereich des Preformkörpers 21 kann sich der Innenraum 19 optional verjüngen, wobei er im Bereich 27 des Bodens 23 des Preforms 11 seinen geringsten Querschnitt erreicht. Vorzugsweise hat die Innenseite 17 der Wand 13 im beschriebenen Bereich 27 einen Abstand von höchstens 3,5 Millimetern von der Mittelachse 12, wobei der Bereich sich an den Boden 23 des Preforms 11 anschliesst und mindestens 30 Millimeter lang ist.

Die Fig. 3a und 3b zeigen anhand des Standes der Technik die Problematik bei der Herstellung eines Kunststoffbehälters aus einem Preform 11 gemäss Fig.1 auf, der einen Preformkörper mit geringem Querschnitt besitzt.

Bei bekannten Streckblasverfahren ist vorgesehen, dass der Reckdorn 51 während des Einfahrens in den Preform 11 bis zum Erreichen von dessen Boden den Preform 11 nicht berührt. Fig.3a stellt diese angestrebte Situation dar. Dort ist gezeigt, dass der Reckdorn 51 ausser an seiner Spitze nicht mit dem Preform 11 in Kontakt tritt.

Im Gegensatz dazu illustriert die Fig.3b die Situation bei inkorrektem Einfahren des Reckdorns 51, bei dem eine seitliche Berührung des Preforms 11 zu einer lokalen Abkühlung desselben an der Berührungsstelle führt. Wie es zu einer solchen Situation kommen kann und was die Folgen sind, wird in der Einleitung ab Seite 1 dieses Dokuments erklärt.

Die Fig. 2 zeigt eine erfindungsgemässe Ausgestaltungsvariante, bei der der Reckdorn 51, während er in den Preform 11 eingefahren wird und bevor er den Boden 23 (vgl. Fig.1) des Preforms 11 erreicht, an mehreren Stellen (vorzugsweise in regelmässigen Abständen) entlang seines Umfangs oder durchgehend entlang seines Umfangs mit der Innenseite 17 (vgl. Fig.1) des Preforms 11 im Bereich des Preformkörpers 21 in Kontakt tritt. Dies führt zu einer gleichmässigeren Beeinflussung der Preform-Temperatur und vermeidet die mit Fig.3b assoziierte Problematik.

Anhand der Fig.1 ist ersichtlich, dass der Preformkörper 21 sich entlang einer Mittelachse 12 des Preforms 11 erstreckt und der Preform 11 eine einen Innenraum 19 des Preforms 11 begrenzende Wand 13 mit einer Innenseite 17 und einer Aussenseite 15 aufweist. Der Reckdorn 51 erstreckt sich entlang einer Mittelachse 52 des Reckdorns, wobei im Idealfall die Mittelachse 52 des Reckdorns beim Einfahren in den Preform 11 im Wesentlichen in Deckung mit der Mittelachse 12 des Preforms 11 ist.

Innerhalb eines sich an die Spitze des Reckdorns 51 anschliessenden Bereichs 49 ist die Ausdehnung des Reckdorns 51 rechtwinklig zur Mittelachse 52 des Reckdorns 51 mindestens so gross wie die Ausdehnung des Innenraums des Preforms 11 rechtwinklig zur Mittelachse 12 des Preforms 11 innerhalb eines sich an den Boden des Preforms 11 anschliessenden Bereichs 29. Es ist möglich, dass dies für den Bereich 49 des Reckdorns und/oder für den Bereich 29 des Preforms in seiner gesamten Länge gilt oder nur für eine, zwei oder mehr Stellen entlang der genannten Bereiche 29,49. Die beiden genannten Bereiche 29,49 sind nicht notwendigerweise gleich lang. Es kann von Vorteil sein, wenn die genannten Bereiche 29,49 eine Länge von mindestens 5, 10 oder 20 Millimetern und/oder höchstens 100, 80 oder 70 Millimetern aufweisen. Richtungsabhängige Angaben zu den Bereichen 29,49 beziehen sich - wenn nichts anderes angegeben ist - auf eine Richtung parallel zur jeweiligen Mittelachse 12,52. Der für den Preform beschriebene Bereich 29 kann dem Bereich 27 mit geringem Querschnitt gemäss Fig.1 entsprechen.

Dadurch, dass der Reckdorn in Relation zur Dimensionierung des Preformkörpers dicker ausgestaltet werden kann, können auch zur Weiterverarbeitung von Preforms mit kleinem Innendurchmesser Reckdorne ausreichender Stabilität eingesetzt werden.

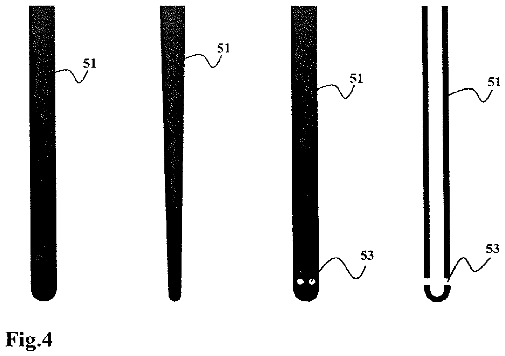

Fig.4 zeigt verschiedene Reckdorn-Typen. Der erste Reckdorn 51 von links besitzt einen zylindrischen Reckdornkörper, der zweite einen konischen. Die dritte und vierte Abbildung stellen denselben Reckdorn 51 einmal in Seitenansicht und einmal im Schnitt entlang der Mittelachse dar. Diese dritte Variante eines Reckdorns 51 ist innen hohl und weist an der Reckdornspitze Öffnungen 53 auf, die in den Hohlraum führen. Durch den Hohlraum und die Öffnungen 53 kann beim (Haupt-)Blasen und/oder beim optionalen Vorblasen das Fluids in den Preform eingebracht werden.

Allgemein kann gesagt werden, dass geeignete Reckdorne 51 einen Querschnitt (Schnitt rechtwinklig zur Mittelachse des Reckdorns) oder einen (äusseren) Umfang des Reckdorns 51, wie er in der Beschreibung definiert ist, aufweisen können, der vorzugsweise rund, oval oder auch (regelmässig oder unregelmässig) vieleckig mit beispielsweise mindestens 4, 5 oder 6 Ecken sein kann. Es ist auch möglich, dass der genannte Querschnitt oder Umfang nach aussen (von der Mittelachse weg) und/oder nach innen (zur Mittelachse hin) weisende Ecken und/oder Rundungen aufweist. Beispielsweise kann der genannte Querschnitt oder Umfang eine Blumenform aufweisen oder der Reckdorn 51 kann Stege besitzen, wie sie in der Beschreibung erwähnt sind.

### Bezugszeichenliste:

- 11: Preform
- 12: Mittelachse
- 13: Wand
- 15: Aussenseite
- 17: Innenseite
- 19: Innenraum
- 21: Preformkörper
- 23: erstes Ende / Boden
- 25: zweites Ende
- 27: Bereich mit geringem Querschnitt
- 29: Bereich der Berührung des Preforms
- 31: Halsteil
- 33: erstes Ende
- 35: zweites Ende / Ausgiessöffnung
- 37: Gewinde
- 39: Supportring
- 49: Bereich der Berührung des Reckdorns
- 51: Reckdorn
- 52: Mittelachse des Reckdorns
- 53: Auslassöffnungen für Gas

## Patentansprüche

1. Streckblasverfahren zur Herstellung eines Kunststoffbehälters aus einem Preform (11), aufweisend einen länglichen, röhrenförmigen, sich entlang einer Mittelachse (12) des Preforms (11) erstreckenden Preformkörper (21) mit einem ersten Ende (23) und einem dem ersten Ende im Wesentlichen gegenüberliegenden zweiten Ende (25), wobei das erste Ende (23) durch einen Preformboden (23) verschlossen ist und sich an das zweite Ende (25) ein Halsteil (31) mit einer Ausgiessöffnung (35) anschließt, und mit einer einen Innenraum (19) des Preforms (11) begrenzenden Wandung (13) mit einer Innenseite (17) und einer Aussenseite (15), wobei
- der Preformkörper (21) auf mindestens 70° Celsius erwärmt wird,
- der Preform (11) in eine Kavität einer Blasform eingebracht wird,
- ein Reckdorn (51) mit einem Reckdornkörper und einer Reckdornspitze in den Preform (11) eingefahren wird, bis die Reckdornspitze den Preformboden (23) erreicht,
- der Preformkörper (21) und der Preformboden (23) durch den Reckdorn (51) in die Kavität hinein gestreckt werden,
- der Preformkörper (21) und der Preformboden (23) durch Einbringen eines Fluids in den Preform (11) unter Druck gemäss der Kavität verformt werden,
wobei der Reckdorn (51), während er in den Preform (11) eingefahren wird, bis er den Preformboden (23) erreicht, die Innenseite (17) der Wandung (13) im Bereich des Preformkörpers (21) an wenigstens einem vorbestimmten Teilbereich (29) berührt, und wobei
innerhalb eines sich an die Spitze des Reckdorns (51) anschließenden Bereichs (49) die Ausdehnung des Reckdorns (51) rechtwinklig zur Mittelachse (52) des Reckdorns (51) mindestens so groß ist wie die Ausdehnung des Innenraums des Preforms (11) rechtwinklig zur Mittelachse (12) des Preforms (11) innerhalb eines sich an den Boden des Preforms (11) anschließenden Bereichs (29), der eine Länge von mindestens 5, 10 oder 20 Millimetern parallel zur Mittelachse (12) aufweist, **dadurch gekennzeichnet,**
**dass** der Preform (11) nach dem Erwärmen des Preforms (11) und/oder beim Einfahren des Reckdorns (51) in den Preform (11) auf der Innenseite (17) der Wandung (13), insbesondere im Bereich des Preformkörpers (21), eine um mindestens 5 Grad Celsius höhere Temperatur aufweist als auf der Aussenseite (15) der Wandung (13), insbesondere im Bereich des Preformkörpers (21).

2. Streckblasverfahren nach Anspruch 1, **dadurch gekennzeichnet, dass** der Reckdornkörper eine Aussenseite mit einer Außenkontur aufweist, die derart ausgebildet ist, dass die Innenseite (17) der Wandung (13) des Preforms (11) im Bereich des Preformkörpers (21) an zumindest zwei im Wesentlichen einander in Bezug auf die Mittelachse (12) des Preforms (11) gegenüberliegenden, sich im Wesentlichen entlang der Mittelachse (12) des Preforms (11) erstreckenden Teilbereichen durch die Aussenseite des Reckdornkörpers berührt wird, während der Reckdorn (51) in den Preform (11) eingefahren wird.

3. Streckblasverfahren nach Anspruch 2, **dadurch gekennzeichnet, dass** der Reckdornkörper wenigstens eine sich im Wesentlichen bis zur Reckdornspitze oder in die Reckdornspitze hinein erstreckende Nut aufweist, die derart ausgestaltet ist, dass das Fluid von der Ausgiessöffnung (35) des Preforms (11) bis zum Preformboden (23) einbringbar ist, wenn der Reckdorn (51) den Preformkörper (21) und den Preformboden (23) in die Kavität hinein bis zu deren Innenwandung gestreckt hat.

4. Streckblasverfahren nach einem der Ansprüche 1 bis 3, **dadurch gekennzeichnet, dass**
- der Reckdorn (51) sich entlang einer Mittelachse (52) des Reckdorns (51) erstreckt,
- in einem sich an die Reckdornspitze anschliessenden Bereich die Ausdehnung des Reckdornkörpers rechtwinklig zur Mittelachse (52) des Reckdorns (51) mindestens so gross ist wie die Ausdehnung des Innenraums (19) des Preforms (11) rechtwinklig zur Mittelachse (12) des Preforms (11) in einem sich in unverstrecktem Zustand des Preforms (11) an den Preformboden (23) anschliessenden Bereich des Preformkörpers (21), und
- die besagte Ausdehnung des Innenraums (19) kleiner als 7 Millimeter, bevorzugt kleiner als 6 Millimeter oder kleiner als 5 Millimeter, und besonders bevorzugt 3 bis 4 Millimeter ist.

5. Streckblasverfahren nach einem der Ansprüche 1 bis 4, **dadurch gekennzeichnet, dass** der Reckdorn (51), während er in den Preform (11) eingefahren wird, den Preformkörper (21) aufweitet.

6. Streckblasverfahren nach einem der Ansprüche 1 bis 5, **dadurch gekennzeichnet, dass**, bevor der Reckdorn (51) in den Preform (11) eingefahren wird, die Innenseite (17) der Wandung (13) im Bereich des Preformkörpers (21) eine um mindestens 10 Grad Celsius höhere Temperatur aufweist, als die Aussenseite (15) der Wandung (13) im Bereich des Preformkörpers (21), wobei die Innenseite (17) der Wandung (13) im Bereich des Preformkörpers (21) vorzugsweise eine Temperatur von mindestens 100 Grad Celsius aufweist.

7. Streckblasverfahren nach einem der Ansprüche 1 bis 6, **dadurch gekennzeichnet, dass** der Preformkörper (21), bevor er erwärmt wird, eine Temperatur von weniger als 40 Grad Celsius aufweist.

8. Streckblasverfahren nach einem der Ansprüche 1 bis 7, **dadurch gekennzeichnet, dass** der Reckdorn (51) auf seiner Aussenseite eine wärmeisolierende und/oder eine haftvermindernde Schicht aufweist.

9. Streckblasverfahren nach einem der Ansprüche 1 bis 8, **dadurch gekennzeichnet, dass** die Aussenseite des Reckdorns (51) oder die Innenseite (17) der Wandung (13) des Preforms (11) im Bereich des Preformkörpers (21) entlang der Einfahrrichtung verlaufende Stege aufweist, die während des Einfahrens des Reckdorns (51) den Kontakt zwischen Reckdorn (51) und Preform (11) herstellen.

10. Streckblasverfahren nach einem der Ansprüche 1 bis 9, **dadurch gekennzeichnet, dass** das Einbringen des Fluids über die Reckdornspitze (53) erfolgt.

11. Streckblasverfahren nach einem der Ansprüche 1 bis 10, **dadurch gekennzeichnet, dass** der Reckdorn (51) vor dem Einfahren in den Preform (11) ausserhalb der Blasform erhitzt wird.

12. Streckblasverfahren nach einem der Ansprüche 1 bis 11, **dadurch gekennzeichnet, dass** die Reckdornspitze, während der Preformkörper (21) und der Preformboden (23) durch den Reckdorn (51) in die Kavität hinein gestreckt werden, einen Weg zurücklegt, der zwischen 20 und 200 Millimeter beträgt.

13. Streckblasverfahren nach einem der Ansprüche 1 bis 12, **dadurch gekennzeichnet, dass**, wenn der Reckdorn (51) den Preformkörper (21) und den Preformboden (23) in die Kavität hinein bis zu deren Innenwandung gestreckt hat, der Reckdornkörper mindestens bis zur Ausgießöffnung (35) des gestreckten Preforms (11) als Zylinder ausgebildet ist.

## Claims

1. Stretch blow moulding method for manufacturing a plastic container from a preform (11) which has an elongated tube-shaped preform body (21), extending along a central axis (12) of the preform (11), with a first end (23) and a second end (25) substantially opposed to the first end, wherein the first end (23) is closed by a preform body (23) and a neck part (31) with a spout opening (35) follows the second end (25), and with a wall (13) that limits an inner space (19) of the preform (11) with an inner side (17) and an outer side (15), wherein
- the preform body (21) is heated up to at least 70°C,
- the preform (11) is placed into a cavity of a blow mould,
- a stretching mandrel (51) with a stretching mandrel body and a stretching mandrel tip is driven into the preform (11) until the stretching mandrel tip reaches the preform bottom (23),
- the preform body (21) and the preform bottom (23) are stretched into the cavity by the stretching mandrel (51),
- the preform body (21) and the preform bottom (23) are deformed in a manner so as to correspond to the cavity by filling in a fluid into the preform (11) under pressure,
wherein the stretching mandrel (51), while being driven into the preform (11) until it reaches the preform bottom (23), touches the inner side (17) of the wall (13) in the area of the preform body (21) on at least one predetermined partial area (29) and
wherein the extension of the stretching mandrel (51) perpendicularly to the central axis (52) of the stretching mandrel (51) inside an area (49) that follows the tip of the stretching mandrel (51) is at least as large as the extension of the inner space of the preform (11) perpendicularly to the central axis (12) of the preform (11) inside an area (29) that follows the bottom of the preform (11), area that has a length of at least 5, 10 or 20 millimeters parallel to the central axis (12),
**characterized in that** the preform (11), after the heating of the preform (11) and/or when the stretching mandrel (51) is driven into the preform (11), has a temperature on the inner side (17) of the wall (13), in particular in the area of the preform body (21), that is at least 5°C higher than on the outer side (15) of the wall (13), in particular in the area of the preform body (21).

2. Stretch blow moulding method according to claim 1, **characterized in that** the stretching mandrel body has an outer side with an outer contour that is configured in such a manner that the inner side (17) of the wall (13) of the preform (11) is touched in the area of the preform body (21) by the outer side of the stretching mandrel body on at least two partial areas, substantially opposed to one another relative to the central axis (12) of the preform (11), that extend substantially along the central axis (12) of the preform (11) while the stretching mandrel (51) is driven into the preform (11).

3. Stretch blow moulding method according to claim 2, **characterized in that** the stretching mandrel body has a groove, extending substantially up to the stretching mandrel tip or into the stretching mandrel tip, that is configured in such a manner that the fluid can be filled-in from the spout opening (35) of the preform (35) up to the preform bottom (23) when the stretching mandrel (51) has stretched the preform body (21) and the preform bottom (23) into the cavity up to the inner wall thereof.

4. Stretch blow moulding method according to one of the claims 1 to 3, **characterized in that**
- the stretching mandrel (51) extends along a central axis (52) of the stretching mandrel (51),
- the extension of the stretching mandrel body perpendicularly to the central axis (52) of the stretching mandrel (51) in an area that follows the stretching mandrel tip is at least as large as the extension of the inner space (19) of the preform (11) perpendicularly to the central axis (12) of the preform (11) in an area of the preform body (21) that follows the preform bottom (23) when the preform (11) is in an unstretched state and
- said extension of the inner space (19) is less than 7 millimeters, preferably less than 6 millimeters or less than 5 millimeters, and particularly preferably 3 to 4 millimeters.

5. Stretch blow moulding method according to one of the claims 1 to 4, **characterized in that** the stretching mandrel (51) enlarges the preform body (21) while being driven into the preform (11).

6. Stretch blow moulding method according to one of the claims 1 to 5, **characterized in that**, before the stretching mandrel (51) is driven into the preform (11), the inner side (17) of the wall (13) has a higher temperature by at least 10°C in the area of the preform body (21) than the outer side (!5) of the wall (12) in the area of the preform body (21), wherein the inner side (17) of the wall (13) has preferably a temperature of at least 100°C in the area of the preform body (21).

7. Stretch blow moulding method according to one of the claims 1 to 6, **characterized in that** the preform body (21), before it is heated, has a temperature of less than 40°C.

8. Stretch blow moulding method according to one of the claims 1 to 7, **characterized in that** the stretching mandrel (51) has a heat insulating and/or an adhesion reducing layer on its outer side.

9. Stretch blow moulding method according to one of the claims 1 to 8, **characterized in that** the outer side of the stretching mandrel (51) or the inner side (17) of the wall (13) of the preform (11) has, in the area of the preform body (21), webs extending along the entry direction that make contact between the stretching mandrel (51) and the preform (11).

10. Stretch blow moulding method according to one of the claims 1 to 9, **characterized in that** the filling-in of the fluid takes place over the stretching mandrel tip (53).

11. Stretch blow moulding method according to one of the claims 1 to 10, **characterized in that** the stretching mandrel (51) is heated outside the blow mould before entering into the preform (11).

12. Stretch blow moulding method according to one of the claims 1 to 11, **characterized in that**, while the preform body (21) and the preform bottom (23) are stretched by the stretching mandrel (51) into the cavity, the stretching mandrel tip covers a distance that is between 20 and 200 millimeters.

13. Stretch blow moulding method according to one of the claims 1 to 12, **characterized in that**, while the stretching mandrel (51) has stretched the preform body (21) and the preform bottom (23) into the cavity up to the inner wall thereof, the stretching mandrel body is configured as a cylinder at least up to the spout opening (35) of the stretched preform (11).

## Revendications

1. Procédé de soufflage-étirage pour la fabrication d'un récipient en matière plastique à partir d'une préforme (11) qui présente un corps de préforme (21) allongé, en forme de tube, qui s'étend le long d'un axe médian (12) de la préforme (11), avec une première extrémité (23) et une seconde extrémité (25) sensiblement opposée à la première extrémité, la première extrémité (23) étant fermée par un fond de préforme (23), et une partie de col (31) avec une ouverture verseuse (35) se rattachant à la seconde extrémité (25), et avec une paroi (13), qui délimite un espace intérieur (19) de la préforme (11), avec une face intérieure (17) et une face extérieure (15), cependant que
- le corps de préforme (21) est réchauffé à au moins 70°C,
- la préforme (11) est mise en place dans une cavité d'un moule de soufflage,
- un mandrin d'étirage (51) avec un corps de mandrin d'étirage et une pointe de mandrin d'étirage rentre dans la préforme (11) jusqu'à ce que la pointe de mandrin d'étirage atteigne le fond de préforme (23),
- le corps de préforme (21) et le fond de préforme (23) sont étirés par le mandrin d'étirage (51) jusque dans la cavité,
- le corps de préforme (21) et le fond de préforme (23) sont déformés conformément à la cavité par la mise en place d'un fluide dans la préforme (11) sous pression,
cependant que le mandrin d'étirage (51), pendant qu'il entre dans la préforme (11) jusqu'à ce qu'il atteigne le fond de préforme (23), touche la face intérieure (17) de la paroi (13) dans la zone du corps de préforme (21) sur au moins une zone partielle prédéterminée (29) et cependant
qu'à l'intérieur d'une zone (49) qui se rattache à la pointe du mandrin d'étirage (51) l'extension du mandrin d'étirage (51) perpendiculairement à l'axe médian (12) du mandrin d'étirage (51) est au moins aussi grande que l'extension de l'espace intérieur de la préforme (11) perpendiculairement à l'axe médian (12) de la préforme (11) à l'intérieur d'une zone (29) qui se rattache au fond de la préforme (11), qui présente une longueur d'au moins 5, 10 ou 20 millimètres parallèlement à l'axe médian (12),
**caractérisé en ce**
**que** la préforme (11) présente, après le chauffage de la préforme (11) et/ou lors de l'entrée du mandrin d'étirage (51) dans la préforme (11), une température supérieure d'au moins 5 degrés sur la face intérieure de la paroi (13), en particulier dans la zone du corps de préforme (21), que sur la face extérieure (15) de la paroi (13), en particulier dans la zone du corps de préforme (21).

2. Procédé de soufflage-étirage selon la revendication 1, **caractérisé en ce que** le corps de mandrin d'étirage présente une face extérieure avec un contour extérieur qui est configuré tel que la face intérieure (17) de la paroi (13) de la préforme (11) est touchée par la face extérieure du corps de mandrin d'étirage dans la zone du corps de préforme (21), sur au moins deux zones partielles sensiblement opposées l'une à l'autre par rapport à l'axe médian (12) de la préforme (11) qui s'étendent sensiblement le long de l'axe médian (12) de la préforme (11), pendant que le mandrin d'étirage (51) entre dans la préforme (11).

3. Procédé de soufflage-étirage selon la revendication 2, **caractérisé en ce que** le corps de mandrin d'étirage présente au moins une gorge qui s'étend sensiblement jusqu'à la pointe du mandrin d'étirage ou qui entre dans la pointe du mandrin d'étirage qui est agencée de telle manière que le fluide peut être mis en place de l'ouverture verseuse (35) de la préforme (11) jusqu'au fond de préforme (23) lorsque le mandrin d'étirage (51) a étiré le corps de préforme (21) et le fond de préforme (23) en pénétrant dans la cavité jusqu'à sa paroi intérieure.

4. Procédé de soufflage-étirage selon l'une des revendications 1 à 3, **caractérisé en ce que**
- le mandrin d'étirage (51) s'étend le long d'un axe médian (52) du mandrin d'étirage (51),
- l'extension du corps de mandrin d'étirage perpendiculairement à l'axe médian (52) du mandrin d'étirage (51) est au moins aussi grande dans une zone qui se rattache à la pointe de mandrin d'étirage que l'extension de l'espace intérieur (19) de la préforme (11) perpendiculairement à l'axe médian (12) de la préforme (11) dans une zone du corps de préforme (21) qui se rattache au fond de préforme (23), la préforme (11) étant à l'état non étiré et
- ladite extension de l'espace intérieur (19) est inférieure à 7 millimètres, de préférence inférieure à 6 millimètres ou inférieure à 5 millimètres et de manière particulièrement préférée de 3 à 4 millimètres.

5. Procédé de soufflage-étirage selon l'une des revendications 1 à 4, **caractérisé en ce que** le mandrin d'étirage (51) élargit le corps de préforme (21) pendant qu'il entre dans la préforme (11).

6. Procédé de soufflage-étirage selon l'une des revendications 1 à 5, **caractérisé en ce que**, avant que le mandrin d'étirage (51) entre dans la préforme (11), la face intérieure (17) de la paroi (13) présente, dans la zone du corps de préforme (21), une température supérieure d'au moins 10 degrés Celsius à la face extérieure (15) de la paroi (13) dans la zone du corps de préforme (21), la face intérieure (17) de la paroi (13) présentant de préférence une température d'au moins 100 degrés Celsius dans la zone du corps de préforme (21).

7. Procédé de soufflage-étirage selon l'une des revendications 1 à 6, **caractérisé en ce que** le corps de préforme (21) présente, avant d'être chauffé, une température inférieure à 40 degrés Celsius.

8. Procédé de soufflage-étirage selon l'une des revendications 1 à 7, **caractérisé en ce que** le mandrin d'étirage (21) présente, sur sa face extérieure, une couche thermoisolante et/ou qui réduit l'adhérence.

9. Procédé de soufflage-étirage selon l'une des revendications 1 à 8, **caractérisé en ce que** la face extérieure du mandrin d'étirage (51) ou la face intérieure (17) de la paroi (13) de la préforme (11) présente, dans la zone du corps de préforme (21), des baguettes le long du sens d'entrée qui établissent le contact entre le mandrin d'étirage (51) et la préforme (11) pendant l'entrée du mandrin d'étirage (51).

10. Procédé de soufflage-étirage selon l'une des revendications 1 à 9, **caractérisé en ce que** la mise en place du fluide se fait par la pointe du mandrin d'étirage (53).

11. Procédé de soufflage-étirage selon l'une des revendications 1 à 10, **caractérisé en ce que** le mandrin d'étirage (51) est chauffé hors du moule de soufflage avant l'entrée dans la préforme (11).

12. Procédé de soufflage-étirage selon l'une des revendications 1 à 11, **caractérisé en ce que**, pendant que le corps de préforme (21) et le fond de préforme (23) sont étirés par le mandrin d'étirage (51) en pénétrant dans la cavité, la pointe de mandrin d'étirage parcourt un trajet qui se situe entre 20 et 200 millimètres.

13. Procédé de soufflage-étirage selon l'une des revendications 1 à 12, **caractérisé en ce que**, lorsque le mandrin d'étirage (51) a étiré le corps de préforme (21) et le fond de préforme (23) en pénétrant à l'intérieur de la cavité jusqu'à sa paroi intérieure, le corps de mandrin d'étirage est configuré comme un cylindre au moins jusqu'à l'ouverture verseuse (35) de la préforme étirée (11).
